# EUROPEAN PATENT SPECIFICATION

(11) **EP 1 946 824 B1**
(45) Date of publication and mention of the grant of the patent: **06.06.2012**
(21) Application number: 07022735.0
(22) Date of filing: 23.11.2007
(51) Int. Cl.: B01D 63/08

(54) **Filtration assemblies with common manifold and use therof**
Filteranordnungen mit gemeinsamer Anschlussplatte und deren Verwendung
Ensembles de filtration avec plaque de distribution commune et leur utilisation

(30) Priority: 11.12.2006 US 874012 P
(43) Date of publication of application: 23.07.2008
(73) Proprietor: PALL CORPORATION, Port Washington, NY 11050 (US)
(72) Inventor: Gagnon, Roger, Great River, NY 11739 (US); Scholz, Thomas, Mt. Sinai, NY 11766 (US); Weinstein, Martin, South Dartmouth, MA 02748 (US); Messier, Sylvia, Stow, MA 01775 (US); Pearl, Steven, Hollis, NH 03049 (US)
(74) Representative: Hoeger, Stellrecht & Partner Patentanwälte

(56) References cited:
- EP-A- 1 258 282
- GB-A- 2 343 853
- US-A- 4 849 102
- US-A- 5 599 447

## Description

### FIELD OF INVENTION

The invention relates to filtration assemblies, manifolds, filtration units, and methods of channeling permeate for any and all types of separation processes. More particularly, it relates to filtration assemblies which include manifolds having isolated permeate collection passages and methods of channeling permeate through the isolated permeate collection passages.

European patent application EP 1 258 282 A2 discloses a mono- or bi-directional plate-shaped device for cross-flow filtration assemblies. The plate-shaped device is composed of three parts in the form of an upper and a lower element as well as a central plate-shaped element which is positioned In between the upper and lower element. The central plate-shaped element comprises on its front and back surfaces openings for feeding unfiltered fluid, receiving filtered fluid and discharging retentate, respectively. The openings are designed to be connected to a plurality of filter cassettes, while the same pressure conditions are maintained at all of the openings. The openings for feeding the unfiltered fluid are interconnected with one another by a feed channel within the central plate-shaped element. The openings for discharging the retentate are interconnected with one another by a retentate discharge channel. The openings for receiving the filtrate are interconnected with one another by filtrate channels which are formed at the interfaces of the central element and the upper and lower elements, respectively.

UK patent application GB 2 343 853 A discloses a mono- or bi-dlrectional fluid distributor plate for filter cassettes. The distributor plate has in one or both of its major surfaces four kinds of openings which communicate with fluid/filtrate ports In its side edges. Openings of the first and second kind are arranged in a line parallel to and adjacent one side. Openings of a third and fourth kind are arranged In a line parallel to and adjacent one side and spaced apart from the openings of the first and second kind. Openings of each kind are interconnected with one another by a common channel serving to feed liquid into the distributor plate and discharge concentrate or filtrate, respectively.

Filtration assemblies embodying the invention may be arranged for tangential flow filtration or for direct flow or dead-end flow filtration. For direct flow or dead-end flow filtration, process or feed fluid is directed to a permeable filtration medium. All of the feed fluid then passes through the filtration medium as filtrate or permeate, except any substances in the fluid that are retained by the filtration medium. For tangential flow filtration, feed fluid is directed tangentially along a permeable filtration medium. A portion of the feed fluid passes through the filtration medium as permeate, and the remaining portion of the feed fluid, the concentrate or retentate, is directed away from the filtration medium.

Filtration assemblies embodying the invention are defined in claim 1 and may include two or more filtration units aligned and compressed between opposite end pieces. One or more manifolds are arranged with the filtration units to feed fluid to the filtration units and/or to collect fluid from the filtration units. A manifold may function as an end piece or may be aligned and compressed with the filtration units between the opposite end pieces.

Each filtration unit may include a casing, for example, as a frame, associated with at least one permeable filtration medium. The filtration medium has a feed side and a permeate side. The casing has feed passages which direct feed fluid to be filtered to the feed side of the filtration medium and permeate passages which collect fluid or permeate which has passed through the filtration medium to the permeate side. In filtration assemblies which are arranged for tangential flow filtration, the casing may also have retentate passages which collect the retentate that has not passed through the filtration medium.

Each manifold may have an inlet and/or an outlet and one or more fluid passages fluidly communicating with the inlet or the outlet. For example, a manifold may include only one type of passage, i.e., only feed passages or only permeate passages or only retentate passages. Alternatively, a manifold may include any two or all three types of passages, e.g., feed and permeate passages but no retentate passages. The present invention further relates to the use of a filtration manifold as defined in claim 8.

The manifold, or manifolds, and the filtration units may be arranged for filtration within the filtration assembly with the appropriate fluid passages communicating with one another. For example, in filtration assemblies which are arranged for tangential flow filtration, a manifold and the filtration units may be aligned with their feed passages fluidly communicating, their retentate passages fluid communicating, and their permeate passages fluidly communicating. Feed fluid may be directed via the feed passages from a manifold to the filtration units, where the feed fluid may be passed tangentially along the feed side of each filtration medium. A portion of the feed fluid may pass as permeate through the permeable filtration medium to the permeate side of the filtration medium. The permeate may then be directed via the permeate passages from the permeate side of each filtration medium to a manifold. The retentate may be directed via the retentate passages from the feed side of each filtration medium to a manifold.

### SUMMARY OF THE INVENTION

In accordance with one aspect of the invention, filtration manifolds comprise a body, a first permeate collection passage in the body, and a second permeate collection passage in the body. The body has a first side and a second side. The first permeate collection passage includes a first permeate inlet on a first side of the body and a first permeate outlet, and the first permeate collection passage is fluidly isolated the second side of the body. The second permeate collection passage includes a second permeate inlet on the second side of the body and a second permeate, outlet, and the second permeate collection passage is fluidly isolated from the first side of the body. Further, the first and second permeate collection passages are isolated from one another within the body.

In accordance with another aspect of the invention, filtration assemblies may comprise at least two filter sets and a manifold. Each filter set may include at least one filtration unit having a filtration medium. The filtration medium may have a feed side and a permeate side. The manifold may include first and second permeate collection passages isolated from one another within the manifold. The first permeate collection passage is in fluid communication with the permeate side of the filtration medium of each filtration unit of the first filter set and fluidly isolated from the permeate side of the filtration medium of each filtration unit of the second filter set. The second permeate collection passage is in fluid communication with the permeate side of the filtration medium of each filtration unit of the second filter set and fluidly isolated form the permeate side of the filtration medium of each filtration unit of the first filter set.

Filtration assemblies and use of manifolds embodying the invention have many advantages. For example; isolated permeate collection passages and isolated permeate collection networks may prevent different permeates from different sources, e.g., different filtration units, from mixing. This simplifies the identification of a failed filtration unit and decreases the time required to identify a failed filtration unit, which decreases overall maintenance time. Moreover, isolation of permeates from different sources may prevent contamination of one permeate when a separate permeate is contaminated due to any upstream breach of integrity, including, e.g., filtration unit failure. Additionally, filtration may continue with respect to one permeate collection passage while filtration with respect to the other permeate collection passage is interrupted for any reason including, e.g., cleaning, maintenance, location of a failed filtration unit, etc. Another advantage includes the possibility of conducting two different separations simultaneously by including one type of filtration unit in the first filter set and another type of filtration unit in the second filter set. For example, the first filter set may include filtration units having different treatment characteristics, such as a different removal rating or a different chemical or physical composition or a different surface chemistry, than the filtration units of the second filter set. An additional advantage includes the ability to compare different types of filtration units in each filter set. Moreover, filtration manifolds, filtration assemblies, methods of channeling permeate, and filtration units according to the invention provide highly efficient and cost-effective filtration of fluids.

### BRIEF DESCRIPTION OF THE DRAWINGS

FIG. 1 is a representative view of one embodiment of a filtration assembly.

FIG. 2 is a front view of a filtration manifold.

FIG. 3 is a transparent view through the top of the filtration manifold showing various fluid passageways.

FIG. 4 is a transparent view through the side of the filtration manifold showing various fluid passageways.

### DESCRIPTION OF PREFERRED EMBODIMENTS

Many different filtration assemblies may embody one or more aspects of the invention. Filtration assemblies according to the invention include at least one manifold and at least two filter sets, each filter set including at least one filtration unit. The manifold includes first and second permeate collection passages isolated from one another. The first permeate collection passage is in fluid communication with the permeate from the filtration units of the first filter set. Further, the first permeate collection passage is fluidly isolated from the permeate form the filtration units of the second filter set, i.e., the first permeate collection passage may not fluidly communicate with any of the permeate which passes through the filtration medium of a filtration unit of the second filter set. Similarly, the second permeate collection passage is in fluid communication with the permeate from the filtration units of the second filter set. Further, the second permeate collection passage is fluidly isolated from the filtration units of the first filter set, i.e., the second permeate collection passage may not fluidly communicate with any of the permeate which passes through the filtration medium of a filtration unit of the first filter set. For example, the first permeation collection passage in the manifold may fluidly communicate only with the permeate which passes through the filtration medium of the filtration units of the first set, and the second permeate collection passage in the manifold may fluidly communicate only with the permeate which passes through the filtration medium of the filtration units of the second set.

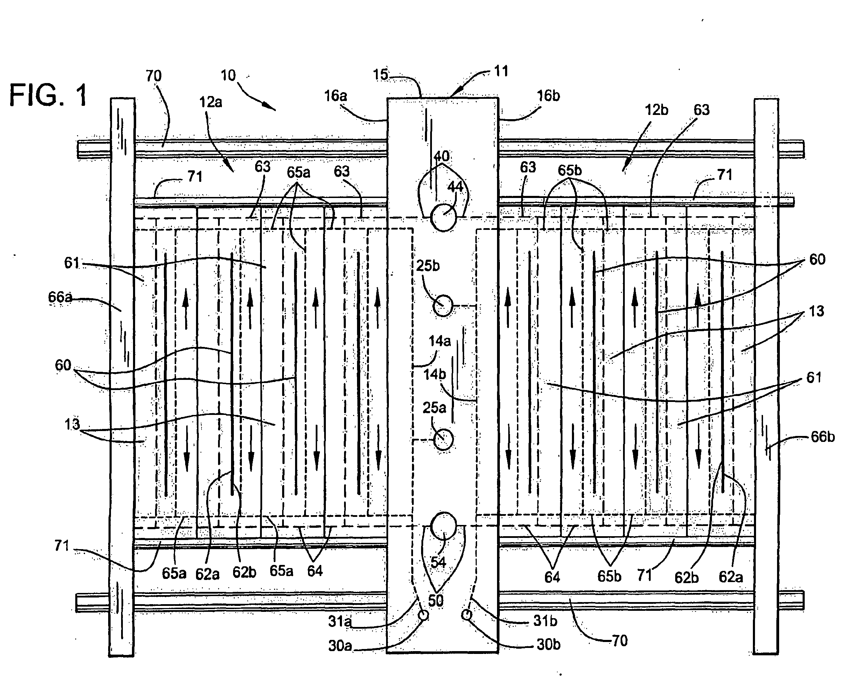

One example of a filtration assembly is a tangential flow filtration assembly, for exemple, as shown in Figure 1. The filtration assembly 10 includes a manifold 11 positioned between first and second filter sets 12a, 12b, each including at least one filtration unit 13. The manifold 11 includes first and second permeate collection 14a, 14b that are isolated from one another. The first and second permeate collection passages 14a, 14b of manifold 11 are in fluid communication with the permeate from the first and second filter sets 12a, 12b, respectively, and are fluidly isolated from the permeate from the second and first filter sets 12b, 12a, respectively.

The manifold may be configured in any of a variety of different ways. For example, as shown in Figures 1-4, the manifold 11 may comprise a body 15 having first and second opposite sides 16a, 16b. The body of the manifold may comprise any suitable material, including, for example, metal, such as stainless steel, or plastic, and may have any suitable configuration, such as, for example, a generally hexagonal configuration. Different separation processes may require different types and/or sizes of filtration units, and the shape and size of the manifold may be varied accordingly.

The body of the manifold may include any of a variety of coupling elements that may connect the manifold within a tangential flow filtration assembly in any of a variety of different ways. Coupling elements may include holes, sockets, fittings, bolts, rivets, screws, or any other structure that may securely attach the manifold within the filtration assembly. For example, the body 15 may include two through holes 20 that may pass through the body 15 and may be used to connect the manifold 11 within the filtration assembly 10 via, e.g., compression rods 70, as shown in Figure 1. Alternatively or additionally, as shown in Figures 1-4, the body 15 may include multiple sockets 21 that may connect to alignment rods 71 which align the filtration units 13 within the filtration assembly 10.

The body of the manifold includes first an second permeate collection passages that may be configured in any of a variety of different ways. For example, the manifold includes permeate inlets on at least two sides of the body and permeate flow into the manifold may be bidirectional, i.e., fluid may flow into, or from, the manifold in at least two different, e.g., opposite, directions.

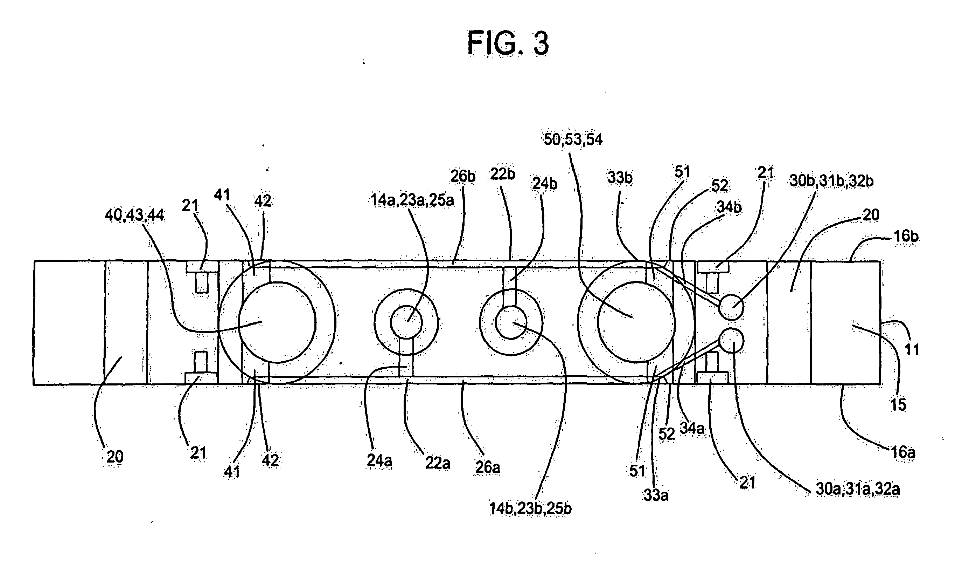

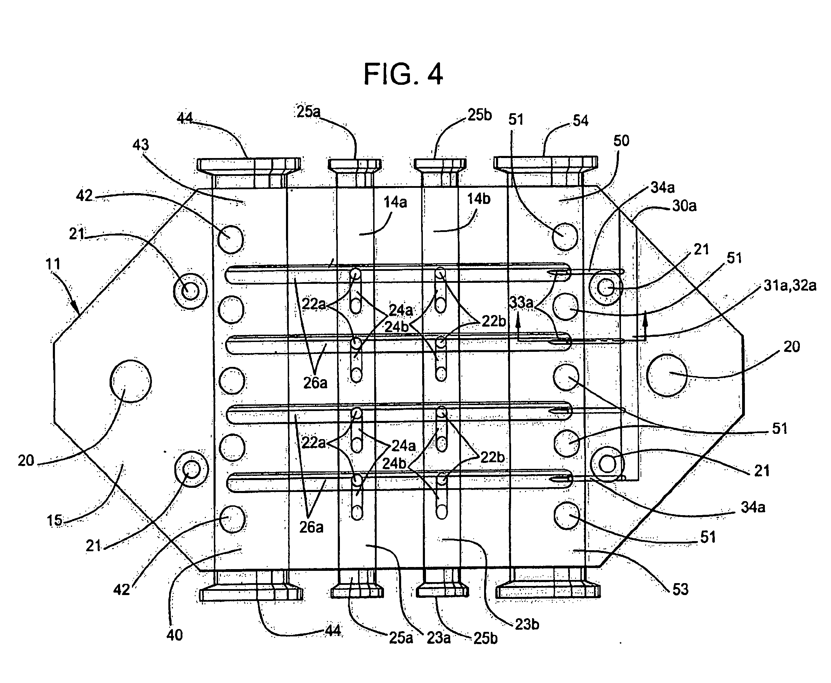

The manifold 11 includes first and second permeate collection passages 14a, 14b that are isolated from one another, as shown in Figure 3 and 4. The first and second permeate collection passages 14a, 14b may collect permeate from different, isolated sources. For example, as shown in Figure 1, the first and second permeate collection passages 14a, 14b may collect permeate from first and second sets 12a, 12b of filtration units 13, respectively, and are isolated from the permeate which passes through the filtration media of the second and first sets 12b, 12a of filtration units 13, respectively. The first and second permeate passages 14a, 14b are isolated from each other and are not in fluid communication at any point inside the manifold. Isolation of the first permeate from the second permeate inside the manifold or inside the filtration assembly may not exclude the combination of the first and second permeates on the exterior of the manifold or the exterior of the filtration assembly, for example, following filtration and/or sampling. In some embodiments, the first collection passage 14a may collect permeate from filtration units 13 of the first filter set 12a, e.g., on the first side 16a of the body 15 of the manifold 11, but may be fluidly isolated from filtration units 13 of the second filter set 12b, e.g., on the second side 16b of the body 15 of the bidirectional manifold 11. The second permeate collection passage 14b may collect permeate from filtration units 13 of second filter set 12b, e.g., on the second side 16 of the body 15 of the bidirectional manifold 11, but may be fluidly isolated from the filtration units 13 of the first filter set 12a, e.g., on the first side 16a of the manifold 11.

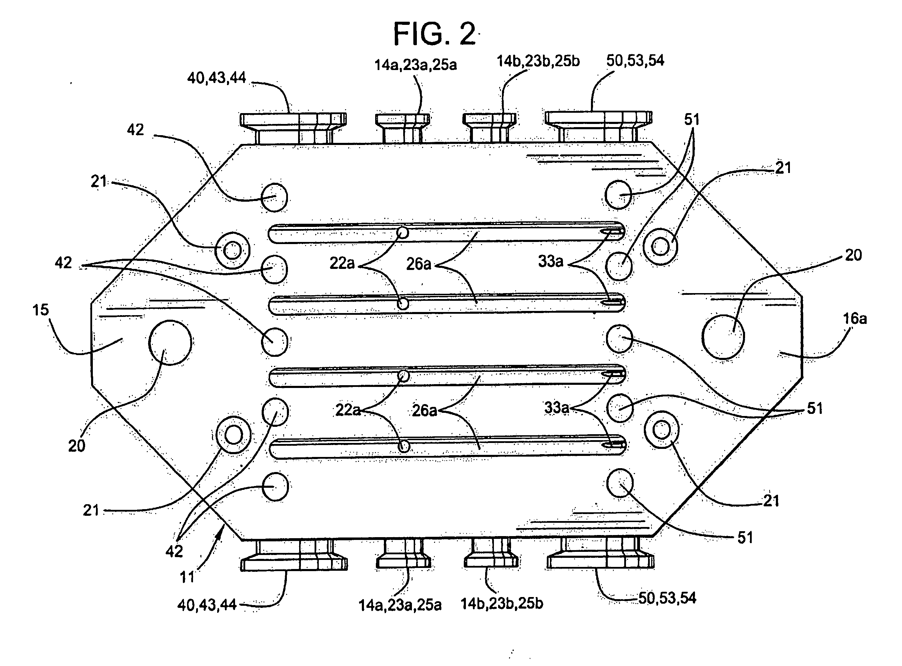

Each permeate collection passage may be configured in any of numerous ways, including as a network of passageways. For example, a first permeate collection passage may include at least one first permeate inlet, at least one first permeate bore, at least one first permeate channel, and at least one first permeate outlet, all of which may be arranged in any of a variety of different ways. For example, as shown in Figures 2-4, the first permeate inlet 22a may fluidly communicate with a first permeate bore 23a via a first permeate channel 24a. The first permeate bore 23a may, in turn, fluidly communicate with a first permeate outlet 25a, for example, at the top and/or bottom of the manifold 11. The first permeate inlet 22a may be located anywhere on the manifold. In many embodiments the first permeate inlet 22a may be positioned on a first side 16a of the manifold 11 and no first permeate inlet may be positioned on the second side 16b.

The second permeate collection passage may be configured in a variety of different ways. For example, the second permeate collection passage may be configured like the first permeate collection passage. The second permeate collection passage may include at least one second permeate inlet, at least one second permeate bore, at least one second permeate channel, and at least one second permeate outlet, all of which may be configured in a variety of different ways. For example, the second permeate inlet 22b may fluidly communicate with a second permeate bore 23b via a second permeate channel 24b. The second permeate bore 23b may, in turn, fluidly communicate with a second permeate outlet 25b, for example, at the top and/or bottom of the manifold 11. The second permeate inlet 22b may be located anywhere on the manifold. In many embodiments the second permeate inlet 22b may be positioned on a second side 16b of the bidirectional manifold 11 and no second permeate inlet may be positioned on the first side 16a.

In many embodiments, either or both of the first and second permeate collection passages may further include at least one permeate conduit. The permeate conduit may fluidly communicate with the permeate inlet, and may be positioned on the exterior or the interior of either or both sides of the manifold. The permeate conduit may be configured in a variety of different ways, including as a groove or a channel. For example, as shown in Figures 2 and 4, one or more first permeate conduits 26a may be in the form of grooves on the first side 16a of the manifold 11 fluidly communicating with the first permeate inlets 22a. Similarly, one or more second permeate conduits 26b may be in the form of grooves on the second side 16b of the manifold 11 fluidly communicating with the second permeate inlets 22b. The permeate conduits 26a, 26b may facilitate the flow of the fluid to the permeate inlets 22a, 22b.

Each permeate collection passage may include any number and configuration of permeate inlets, permeate outlets, permeate bores, permeate channels, and/or permeate conduits. In some embodiments, as shown in Figures 2-4, the first permeate collection passage may include multiple first permeate channels 24a, for example, between 2 and 20 channels, and multiple first permeate inlets 22a, for example, between 2 and 20 inlets. In some embodiments, all of the first permeate inlets 22a may be in the first side 16a of the manifold 11 and none of the first permeate inlets may be in the second side 16b. Each first permeate channel 24a may connect a single first permeate bore 23 a to a different first permeate inlet 22a on the first side 16a of the manifold 11. Likewise, the second permeate collection passage, which is isolated from the first permeate collection passage, may include multiple second permeate channels 24b, for example, between 2 and 20 channels, and multiple second permeate inlets 22b, for example, between 2 and 20 inlets. Each of the second permeate inlets 22b may be in the second side 16b of the bidirectional manifold 11 and none of the second permeate inlets may be in the first side 16a. Each second permeate channel 24b may connect a single second permeate bore 23b to a different second permeate inlet 22b on the second side 16b of the manifold 11. In the isolated first and second permeate passages, the first permeate inlets 22a, first permeate bore 23a, first permeate conduit 26a, first permeate channels 24a, and first permeate outlet 25a do not fluidly communicate with the second permeate inlets 22b, second permeate bore 23b, second permeate conduit 26b, second permeate channels 24b, and second permeate outlet 25b.

In some embodiments, the first and second permeate collection passages may be identical and may include the same number and/or configuration of passageways. In other embodiments, one permeate collection passage may differ from the other permeate collection passage. For example, one permeate collection passage may include more passageways than the other permeate collection passage. However, the first and second permeate collection passages may still be isolated from one another.

The permeate collection passages, including the permeate inlets, permeate outlets, permeate bores, permeate conduits and permeate channels may have any suitable shape, size, and orientation. For example, a permeate bore may have a larger width or diameter than the permeate channels because it may collect permeate from multiple permeate channels. The permeate inlets and permeate outlets may be, for example, circular or elliptical in shape, and may be positioned at any suitable locations on the manifold. The permeate channels may be configured in any suitable manner that fluidly communicates between the permeate inlets and the permeate bores.

The manifold may further include first and second permeate sampling ports. For example, as shown in Figures 2-4, the manifold 11 may include a first sampling port 30a and a second sampling port 30b. The first sampling port 30a may be in fluid communication with the first permeate collection passage 14a and isolated from the second permeate collection passage 14b. The second sampling port 30b may be in fluid communication with the second permeate collection passage 14b and isolated from the first permeate collection passage 14a. The first sampling port 30a may thus fluidly communicate only with the permeate that passes through the filtration media of the filtration units 13 of the first set 12a. In the embodiment of Figure 1, the first sampling port 30a then fluidly communicates only with the permeate from the filtration units 13 on the first side 16a of the manifold 11. The second sampling port 30b may fluidly communicate only with the permeate that passes through the filtration media of the filtration units 13 of the second set 12b. In the embodiment of Figure 1, the second sampling port 30b then fluidly communicates only with the permeate from the filtration units 13 on the second side 16b of the bidirectional manifold 11.

The sampling ports may each include one or more sampling passages and may be configured in any suitable way. For example, the first sampling port may include a first sampling passage 31a that is in fluid communication with any portion of the first permeate collection passage, e.g., in fluid communication with the first permeate inlet, the first permeate bore, the first permeate conduit, the first permeate outlet, and/or the first permeate channels. Likewise, the second sampling port may include a second sampling passage 31b that is in fluid communication with any portion of the second permeate collection passage, e.g., in fluid communication with the second permeate inlet, the second permeate bore, the second permeate conduit, the second permeate outlet, and/or the second permeate channels.

Each sampling passage may be configured in any of a variety of different ways. For example, each sampling passage may include any or all of sampling inlet(s), sampling channel(s), and sampling bore(s), any or all of which may fluidly communicate with a permeate passage. For example, as shown in Figures 2-4, the first sampling port 30a may be in fluid communication with the first sampling passage 31a, which may include a first sampling bore 32a. The first sampling bore 32a may fluidly communicate with one or more first permeate sampling inlets 33a via first permeate sampling channels 34a. The first permeate sampling inlets 33a may be positioned, e.g., on the first side 16a of body 15 of manifold 11. Likewise, a second sampling port 30b may be in fluid communication with a second permeate sampling passage 31b which may include a second permeate sampling bore 32b. The second permeate sampling bore 32b may fluidly communicate with one or more second sampling inlets 33b via a second sampling channels 34b. The second sampling inlets 33b may be positioned, e.g., on the second side 16b of the body 15 of a bidirectional manifold 11. The sampling inlets 33a, 33b of either or both of the first and second sampling passages may also fluidly communicate with a permeate conduit 26a, 26b. The permeate conduits 26a, 26b may facilitate the flow of permeate to the sampling inlets 33a, 33b. The number, shape and size of any component of the sampling passages may be varied to accommodate any sampling devices, technique or volume.

The manifold includes at least one feed passage for receiving feed fluid from a source and distributing feed fluid to the filtration units. Manifolds having a feed passage may also be used in dead-end flow filtration assemblies or tangential flow filtration assemblies. The feed passage may be configured in a variety of different ways. For example, the feed passage may comprise a network that may include at least one feed inlet, at least one feed bore, at least one feed channel, and at least one feed outlet. A feed inlet may be positioned, for example, at the top, bottom, and/or one or both ends of the body of the manifold. A feed outlet may be positioned on only one side and feed fluid may flow unidirectionally from the manifold, or a feed outlet may be positioned on each of at least two sides, e.g., opposite sides, and the feed fluid may flow bidirectionally from the manifold. The feed passage 40 may include one or more feed channels 41, for example, between 1 and 20 feed channels. Each side 16a, 16b of the body 15 of a bidirectional manifold 11 may include one or more feed outlets 42, for example, between 1 and 20 feed outlets. Each feed channel 41 may connect a feed bore 43 to a different feed outlet 42. As shown in Figure 4, for example, the feed passage 40 may include a feed inlet 44 at the top and bottom of the manifold 11 fluidly communicating with the feed channels 41 via the feed bore 43. The feed channels 41, in turn, may fluidly communicate with feed outlets 42 positioned on the first side 16a and/or the second side 16b of the body 15 of the manifold 11.

Additionally, the manifold may include at least one retentate passage for receiving retentate fluid from the filtration units and directing the retentate from the manifold. Manifolds having a retentate passage may be used in tangential flow filtration assemblies. The retentate passage may be configured in a variety of different ways. For example, the retentate passage 50 may comprise a network that may include at least one retentate inlet, at least one retentate bore, at least one retentate channel, and at least one retentate outlet. A retentate inlet may be positioned on only one side and retentate may flow unidirectionally into the manifold, or a retentate inlet may be positioned on each of at least two sides, e.g., opposite sides, and the retentate may flow bidirectionally into the manifold. Each side 16a, 16b of the body 15 of a bidirectional manifold 11 may include one or more retentate inlets 51, for example, between 1 and 20 retentate inlets. The retentate passage 50 may further include one or more retentate channels 52, for example, between 1 and 20 retentate channels. Retentate inlets 51 on the first side 16a and/or the second side 16b of the body 15 of the manifold 11 may fluidly communicate with a retentate bore 53 via the retentate channels 52. For example, each retentate channel 52 may connect the retentate bore 53 to a different retentate inlet 51. The retentate bore 53 may, in turn, fluidly communicate with a retentate outlet 54, for example, at the top and bottom of the manifold 11.

In the illustrated embodiment, the tangential flow filtration manifold 11 may include permeate, feed, and retentate passages. Although the manifold has been described above in terms of tangential flow filtration applications, manifolds according to the invention may also be suitable for direct flow and deadend flow applications. Such manifolds may have passages that are similar to those of a tangential flow filtration manifold, but they may lack retentate passages. The retentate may then be supplied to and/or collected from the filtration units in other ways, for example, by additional manifolds.

The filtration assembly may further comprise a plurality of filter sets, e.g., at least two filter sets, which may be configured in any of a variety of different ways. For example, as shown in Figure 1, each filter set 12a, 12b may include at least one filtration unit 13, although each filter set 12a, 12b may include any number of filtration units 13. For example, the filter sets 12a, 12b shown in Figure 1 each include four filtration units 13. The first and second filter sets 12a, 12b may include the same number of filtration units 13, as shown in Figure 1, or one filter set may include more filtration units than the other filter set. The filtration units 13 of the first and second filter sets 12a, 12b may be configured identically or differently.

The filter sets may be arranged within a filter assembly in any of a variety of different ways. For example, as shown in Figure 1, all of the filtration units 13 in the first filter set 12a may be on the first side 16a of the body 15 of the manifold 11 and all of the filtration units 13 in the second filter set 12b may be on the second side 16b of the body 15 of the manifold 1. In other embodiments, the first filter set may include filtration units on both the first and second sides of the body of the manifold and the second filter set may include filtration units on both the first and second sides of the body of the manifold. In still other embodiments, the filtration units of the first set may all be on one side of the body while the filtration units of the second set may be on both sides of the body of the manifold. Alternatively, the filtration units of both the first and second filter sets may be on the same side of the manifold.

A filtration unit may have any size and shape and may be configured in a variety of different ways. For example, a filtration unit may include a filtration medium cooperatively arranged with a casing. The casing may include any suitable housing for the filtration medium, e.g., a frame. The filtration unit may be part of a plate and frame device in which separate filtration medium sheets and frames are compressed and sealed between one another. Alternatively, the filtration unit may comprise a filtration cassette in which a filtration medium is integrally fitted with and sealed to a casing.

As shown in Figure 1, each filtration unit 13 may include a filtration medium 60 arranged with a casing 61 to define a feed side 62a and a permeate side 62b of the filtration medium 60. The filter medium may be porous or permeable and may have any suitable treatment characteristic. For example, the filtration medium may have, or may be modified to have, any of several characteristics. The filtration medium may have a positive, negative, or neutral electrical charge; it may be liquiphobic or liquiphilic, including, for example, hydrophobic or hydrophilic, or oleophobic or oleophilic; it may include attached functional groups, such as ligands, that can chemically bind to substances in the fluid. The filtration medium may be formed from, impregnated with, or otherwise contain a variety of materials, such as sorbents, ion exchange resins, enzymes, or catalysts, that may chemically or physically bind, react with, or otherwise alter substances in the fluid. Further, the filtration medium may have any of a wide range of molecular cutoffs or removal ratings, including, for example, from ultraporous or nanoporous or finer to microporous or coarser. The filtration medium may thus function as a treatment medium of any type, including a capture medium, a separation medium, or a filter medium.

A filtration unit may also include at least one feed passage fluidly communicating with the feed side of the filtration medium and at least one permeate passage fluidly communicating with the permeate side of the medium. For some embodiments, the filtration unit may further include at least one retentate passage fluidly communicating with the feed side of the filtration medium. For example, as shown in Figure 1, each filtration unit 16 may include a feed passage 63 which may pass completely through one end of the casing 61 and branch across and fluidly communicate with the feed side 62a of the filtration medium 60. Each filtration unit 13 may further include a retentate passage 64 which may pass completely through the other end of the casing 61 and branch across and fluidly communicate with the feed side 62a of the filtration medium 60 and the feed passage 63. Each filtration unit 13 of the first and second filter sets 12a, 12b may include a permeate passage 65a, 65b which may pass completely through one or both ends of the casing 61 and branch across and fluidly communicate with the permeate side 62b of the filtration medium 13 from one or both ends of the casing 61.

The manifold and the multiple sets of filtration units may be assembled within the filtration assembly in any of numerous ways. For example, the filtration assembly may further include at least one end piece, at least one compression rod, and at least one alignment rod to assemble the manifold and the sets of filtration units within the filtration assembly with their feed passages, retentate passages, and permeate passages in respective fluid communication. In particular, the manifold and the sets of filtration units may be assembled within the filtration assembly such that (1) a first permeate collection passage of the manifold fluidly communicates with the permeate passages of the first filter set that conduct permeate from the permeate side of the filtration media of the filtration units of a first filter set but is isolated from the permeate passages of the second filter set that conduct permeate from the permeate side of the filtration media of the filtration units of a second filter set and (2) a second permeate collection passage of the manifold fluidly communicates with the permeate passages of the second filter set that conduct permeate from the permeate side of the filtration media of the filtration units of the second filter set but is isolated from the permeate passages that conduct permeate from the permeate side of the filtration media of the first filter set.

In the embodiment of Figure 1, the manifold 11 and the filtration units 13 may be aligned and compressed against one another between opposite end pieces 66a, 66b by a plurality of compression rods 70 and/or a plurality of alignment rods 71. The end pieces may be variously configured, for example, as end plates 66a, 66b. Alternatively, the end pieces may comprise one or more manifolds. The compression rods 70 and the alignment rods 71 may have any of numerous configurations. For example, the compression rods may, or may not, be configured as disclosed in United States Provisional Patent Application No. 60/873,980 entitled Filtration Assemblies and Methods of Maintaining Compression of Filtration Units in Filtration Assemblies, which listed Roger Gagnon, Franco Morizio, and Robert Ieraci as an inventor and which was filed on December 11, 2006. The alignment rods may, or may not, be configured as disclosed in United States Provisional Patent Application No. 60/873,944 entitled Filtration Assemblies and Methods of Installing Filtration Units in Filtration Assemblies, which listed Robert Gagnon, Thomas Scholz, Sylvia Messier, and Martin Weinstein as an inventor and which was filed on December 11, 2006. Some embodiments may include both one or more compression rods and one or more alignment rods. Other embodiments may include compression rods and no alignment rods, and the compression rods may additionally serve to align the filtration units and the manifold. Still other embodiments may include alignment rods and no compression rods, and the alignment rods may additionally serve to establish and/or maintain compression of the filtration assembly.

The alignment rods and compression rods may be positioned in the assembly in a variety of different ways. For example, at least one alignment rod may extend from or through at least one end piece to or through the body of the manifold. The alignment rods may align the filtration units with the manifold. For example, as shown in Figure 1, first and second alignment rods 71 may extend from first and second end pieces 66a, 66b, respectively, into sockets 21 on the body 15 of the manifold 11. The alignment rods 71 may align the manifold 11 and the filtration units 13 with their feed passages, retentate passages and permeate passages, respectively, in fluid communication with one another. At least one compression rod may extend from or through at least one end piece to or through the body of the manifold. The compression rods may compress the filtration units between the manifold and end piece(s), sealing them to one another. For example, as shown in Figure 1, first and second compression rods 70 may extend through the first and second end plates 66a, 66b through holes 20 in the body 15 of the manifold 11. The compression rods 70 may compress the filtration units 13 and the manifold 11 between the first and second end plates 66a, 66b to seal them against one another with the respective passages in fluid communication. The end plates 66a, 66b may be arranged to seal any fluid passages in the adjacent filtration units 13.

In the embodiment of Figure 1, the first filter set 12a of filtration units 13 may be mounted to a first side 16a of the manifold 11, while the second filter set 12b of filtration units 13 may be mounted to the opposite second side 16b of the manifold 11. The feed passages 63 and the retentate passages 64 of the filtration units 13 of the first set 12a may respectively fluidly communicate with the feed outlets 42 and the retentate inlets 51 on the first side 16a of the manifold 11. The feed passages 63 and the retentate passages 64 of the filtration units 13 of the second set 12b may respectively fluidly communicate with the feed outlets 42 and the retentate inlets 51 on the second side 16b of the manifold 11. Further, the permeate passages 65a of the filtration units 13 of the first set 12a may fluidly communicate only with the permeate inlets 22a on the first side 16a of the manifold 11 and the remainder of the first permeate collection passage 14a and may be isolated from the permeate inlets 22b on the second side 16b of the manifold 11 and the remainder of the second permeate collection passage 14b in the manifold 11. The permeate passages 65b of the filtration units 13 of the second set 12b may fluidly communicate only with the permeate inlets 22b on the second side 16b of the manifold 11 and the remainder of the second permeate collection passage 14a and may be isolated form the permeate inlets 22a on the first side 16a of the manifold 11 and the remainder of the first permeate collection passage 14a in the manifold 11.

In accordance with other embodiments of the invention, multiple filtration assemblies may be coupled in any of numerous ways, e.g., stacked either on top of one another, side by side, or end to end, and connected in series and/or parallel arrangements. For example, filtration manifolds from two adjacent filtration assemblies may be aligned such that they are in fluid communication with one another.

The filtration assemblies, manifolds, and filtration units may be used to filter fluids in any of a variety of different ways. Filtering fluids may include directing a feed fluid to a filtration unit of the filtration assembly in any of a variety of different ways. For example, filtering a fluid may include supplying the feed fluid to a feed passage 40 of a manifold 11 via a feed inlet 44 from a source. The feed fluid may pass through the feed inlet 44 into the feed bore 43 and then pass into one or more feed channels 41 to one or more feed outlets 44 of the manifold 11. From the feed outlet 44, the feed fluid may exit the manifold 11 bidirectionally or unidirectionally and enter the feed passages 63 of filtration units 13 of both filter sets 12a, 12b. In the embodiment of Figure 1, the feed fluid may exit bidirectionally from both sides 16a, 16b of the manifold 11 and enter one filter set 12a on one side 16a and the other filter set 12b on the other side 16b. In the embodiment of Figure 5, the feed fluid may exit unidirectionally from one side 16a of the manifold 11 and enter both filter sets 12a, 12b on that side.

The feed fluid may pass from the manifold through the filtration units in a variety of different ways. For example, the feed fluid may pass from the feed outlet 44 of the manifold 11 through the feed passages 63, e.g., on one end of the filtration units 13, of both filter sets 12a, 12b, where it may contact the feed side 62a of filtration media 60. The feed fluid may pass tangentially along the feed side 62a of each filtration media 60, where a portion of the feed fluid, i.e., the permeate, passes through the filtration medium 60 from the feed side 62a to the permeate side 62b. The remainder of the feed fluid, i.e., the retentate, may pass along from the feed side 62a of the filtration media 60 to the retentate passages 64, e.g., on the other end of the filtration units 13, of both filter sets 12a, 12b, along which the retentate passes to the retentate inlets 51 of the manifold 11.

The retentate may pass through the manifold in any of a variety of different ways. For example, the retentate may pass from the retentate passages 64 of the filter sets 12a, 12b into one or more retentate inlets 51. In the embodiment of Figure 1, the retentate may exit the retentate passages 64 of the filter sets 12a, 12b and bidirectionally enter the retentate inlets 51 on both sides 16a, 16b of the manifold 11. In the embodiment of Figure 5, the retentate may exit the retentate passages 64 of the filter sets 12a, 12b and unidirectionally enter the retentate inlet 51 on only one side 16a of the manifold 11. From the retentate inlet 51, the retentate may further pass through one or more retentate channels 52 into the retentate bore 53 and exit the retentate bore 53 and the manifold 11 through the retentate outlet 54. Alternatively, the retentate may be passed from the retentate passages of the filter sets into a separate retentate manifold and may exit the assembly from the separate retentate manifold. Additionally, the retentate may be recirculated to the feed passages of the manifold and filter sets.

Filtering the fluid may also include passing the permeate through the filtration medium 60, where the fluid may be treated in any of numerous ways. From the permeate side of the filtration media, the permeate from the filtration units may be directed to the manifold in any manner in which the permeate from the first filter set remains isolated from the permeate from the second filter set. For example, the permeate from all of the filtration units on one side of the manifold may be directed to permeate inlets on that side of the manifold, while the permeate from all of the filtration units on the other side of the manifold may be directed to permeate inlets on the other side of the manifold. The permeate from the filtration units on one side of the manifold may then be commingled en route to the manifold, and the permeate from the filtration units on the other side of the manifold may be commingled en route to the manifold.

In the embodiment of Figure 1, the permeate may pass bidirectionally into the manifold 11. For example, the permeate from each filtration unit 13 of the first set 12a, which is on the first side 16a of the manifold 11, may pass to the first permeate collection passage 14a on the first side 16a of the manifold 11. From the permeate side 62b of each filtration unit 13 of the first set 12a, the permeate may pass to either end of the filtration unit 13 and along the permeate passages 65a in the opposite ends of the filtration units 13 to the first permeate collection passage 14a in the first side 16a of the manifold 11. Alternatively, the permeate may pass to only one end of each filtration unit and along a permeate passage to the manifold. The permeate from all of the filtration units 13 on the first side 16a of the manifold 11 may be commingled.

Similarly, the permeate from each filtration unit 13 of the second set 12b, which is on the second side 16b of the manifold 11, may pass to the second permeate collection passage 14b on the second side 16b of the manifold 11. From the permeate side 62b of each filtration unit 13 of the second set 12b, the permeate may pass to either end, or only one end, of the filtration unit 13 and along the permeate passages 65b in the opposite ends of the filtration units 13 to the second permeate collection passage 14b in the second side 16b of the manifold 11. The permeate from all of the filtration units 13 on the second side 16b of the manifold 11 may be commingled.

As an alternative example, the permeate from one set of filtration units on one side of the manifold may be directed to permeate inlets on that side of the manifold, while the permeate from another set of filtration units on the same side of the manifold may be directed to other permeate inlets on that side of the manifold. The permeate from the filtration units of the first set may be commingled en route to the manifold, and the permeate from the filtration units of the second set may be commingled en route to the manifold. However, the permeate from the filtration units of the first set and the permeate from the filtration units of the second set may be fluidly isolated from one another en route to the manifold.

For many embodiments, the first permeate and the second permeate in the manifold may be separately sampled in any of numerous ways. For example, portions of permeate produced in each of first and second filter sets 12a, 12b may respectively pass into first and second sampling bores 32a, 32b via first and second sampling passages 31a, 31b, which may, in turn, be in fluid communication with the first and second permeate collection passages 14a, 14b of the manifold 11, respectively. Samples of the first permeate and the second permeate may be obtained, for example, from the first and second sampling ports 30a, 30b. Samples of the first permeate may be fluidly isolated from samples of the second permeate in their respective sampling flow paths. Samples may be easily drawn at regular intervals and tested for any of a variety of different characteristics, including removal efficiency and contamination. Samples may be any suitable volume necessary for any test. Since the first permeate collection passages and the first sampling flow paths may be isolated from the second permeate collection passages and the second sampling flow paths, any contamination or poor removal efficiency detected in the sample drawn from a sample port may pinpoint which filter set includes a filtration unit that requires repair, cleaning, or other maintenance. Since only one filter set may then be examined for a faulty filtration unit, the assemblies, manifolds, filtration units, and methods of the invention greatly reduce the maintenance time and provide for a more efficient filtration process.

While various aspects of the invention have been illustrated and described with reference to several embodiments, variations of these embodiments as well as completely different embodiments may be encompassed by the invention. For example, one or more of the features of any of the disclosed embodiments may be substituted and/or combined with one or more features of any other embodiment. Additionally, an embodiment may include fewer than all of the features of each disclosed embodiment. Accordingly, the invention includes all modifications encompassed within the spirit and scope of the invention as defined by the following claims.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate in the scope of the claims.

## Claims

1. A filtration assembly (10) comprising:
two or more filter sets (12a; 12b), each filter set including at least one filtration unit having a filtration medium, and
a filtration manifold (11) comprising a body (15) having first and second sides (16a, 16b); a first permeate collection passage (14a) in the body (15) in fluid communication with the permeate side of the filtration medium of each filtration unit of the first filter set (12a), the first permeate collection passage (14a) including a first permeate inlet (22a) on the first side (16a) of the body (15) and a first permeate outlet (25a) on the body (15) for discharging permeate from the manifold (11); and a second permeate collection passage (14b) in the body (15) in fluid communication with the permeate side of the filtration medium of each filtration unit of the second filter set (12b), the second permeate collection passage (14b) including a second permeate inlet (22b) on the second side (16b) of the body (15) and a second permeate outlet (25b) on the body (15) for discharging permeate from the manifold,
wherein the first permeate collection passage (14a) is fluidly isolated from the second side (16b) of the body (15), the second permeate collection passage (14b) is fluidly isolated from the first side (16a) of the body (15), and the first and second permeate collection passages (14a, 14b) are isolated from one another within the body (15) and are not in fluid communication at any point in the manifold (11), the first permeate outlet (25a) discharging from the manifold (11) only permeate from the first permeate collection passage (14a) and the first side (16a) of the manifold (11) and the second permeate outlet (25b) discharging from the manifold (11) only permeate from the second permeate passage (14b) and the second side (16b) of the manifold (11),
and wherein the manifold (11) includes a feed passage (40), the feed passage (40) having a feed outlet (42) fluidly communicating with the feed side (62a) of the filtration medium (60) of each filtration unit (13) of the first and second filter sets (12a, 12b).

2. A filtration assembly according to claim 1, wherein the first permeate collection passage (14a) further includes a first permeate network disposed in the body (15) and including a first permeate bore (23a) coupled to the first permeate outlet (25a) and at least one first permeate channel (24a) connecting the first permeate inlet (22a) to the first permeate bore (23a) and wherein the second permeate collection passage (14b) further includes a second permeate network disposed in the body (15) and including a second permeate bore (23b) coupled to the second permeate outlet (25b) and at least one second permeate channel (24b) connecting the second permeate inlet (22b) to the second permeate bore (23b) .

3. The filtration assembly according to claim 1, wherein the first permeate collection passage includes multiple first permeate channels (24a) and multiple first permeate inlets (22a) on the first side (16a) of the manifold (11), wherein the second permeate collection passage includes multiple second permeate channels (24b) and multiple second permeate inlets (22b) on the second side (16b) of the manifold (11), and wherein the first permeate inlets (22a) fluidly communicate with a single first permeate passageway (23a) that fluidly communicates with the first permeate outlet (25a) and wherein the second permeate inlets (22b) fluidly communicate with a single second permeate passageway (23b) that fluidly communicates with the second permeate outlet (25b).

4. A filtration assembly according to any one of the preceding claims, further comprising one or more first permeate conduits in the form of grooves (26a) on the first side (16a) of the manifold (11) fluidly communicating with first permeate inlets (22a) and one or more second permeate conduits in the form of grooves (26b) on the second side (16b) of the manifold (11) fluidly communicating with second permeate inlets (22b).

5. A filtration assembly according to any one of the preceding claims, further comprising a first sampling port (30a) in fluid communication with the first permeate collection passage (14a) and isolated from the second permeate collection passage (14b) and a second sampling port (30b) in fluid communication with the second permeate collection passage (14b) and isolated from the first permeate collection passage (14a); optionally wherein the body (15) further includes a feed passage (40), the feed passage (40) including a feed outlet (42) on each side of the body (15), and/or wherein the body (15) further includes a retentate passage (50), the retentate passage (50) including a retentate inlet (51) on each side of the body (15).

6. A filtration assembly comprising a filtration manifold (11) of any one of claims 1 to 5 and first and second filter sets (12a, 12b), wherein each filter set (12a, 12b) includes at least one filtration unit (13) having a filtration medium (60), the filtration medium (60) having a feed side (62a) and a permeate side (62b), wherein the first permeate collection passage (14a) is in fluid communication with the permeate side (62b) of the filtration medium (60) of each filtration unit (13) of the first filter set (12a) and is fluidly isolated from the permeate side (62b) of the filtration medium (60) of each filtration unit (13) of the second filter set (12b), and wherein the second permeate collection passage (14b) is in fluid communication with the permeate side (62b) of the filtration medium (60) of each filtration unit (13) of the second filter set (12b) and is fluidly isolated from the permeate side (62b) of the filtration medium (60) of each filtration unit (13) of the first filter set (12a).

7. A filtration assembly according to claim 6, wherein the manifold (11) includes a retentate passage (50), the retentate passage (50) having a retentate inlet (51) fluidly communicating with the feed side (62a) of the filtration medium (60) of each filtration unit (13) of the first and second filter sets (12a, 12b).

8. Use of a filtration manifold (11) in a filtration assembly (10) comprising two or more filter sets (12a; 12b), each filter set including at least one filtration unit having a filtration medium; said filtration manifold (11) comprising a body (15) having first and second sides (16a, 16b); a first permeate collection passage (14a) in the body (15) in fluid communication with the permeate side of the filtration medium of each filtration unit of the first filter set (12a), the first permeate collection passage (14a) including a first permeate inlet (22a) on the first side (16a) of the body (15) and a first permeate outlet (25a) on the body (15) for discharging permeate from the manifold (11); and a second permeate collection passage (14b) in the body (15) in fluid communication with the permeate side of the filtration medium of each filtration unit of the second filter set (12b), the second permeate collection passage (14b) including a second permeate inlet (22b) on the second side (16b) of the body (15) and a second permeate outlet (25b) on the body (15) for discharging permeate from the manifold,
wherein the first permeate collection passage (14a) is fluidly isolated from the second side (16b) of the body (15), the second permeate collection passage (14b) is fluidly isolated from the first side (16a) of the body (15), and the first and second permeate collection passages (14a, 14b) are isolated from one another within the body (15) and are not in fluid communication at any point in the manifold (11), the first permeate outlet (25a) discharging from the manifold (11) only permeate from the first permeate collection passage (14a) and the first side (16a) of the manifold (11) and the second permeate outlet (25b) discharging from the manifold (11) only permeate from the second permeate passage (14b) and the second side (16b) of the manifold (11), and wherein the manifold (11) includes a feed passage (40), the feed passage (40) having a feed outlet (42) fluidly communicating with the feed side (62a) of the filtration medium (60) of each filtration unit (13) of the first and second filter sets (12a, 12b).

9. The use of a filtration manifold according to claim 8, wherein the first permeate collection passage (14a) further includes a first permeate network disposed in the body (15) and including a first permeate bore (23a) coupled to the first permeate outlet (25a) and at least one first permeate channel (24a) connecting the first permeate inlet (22a) to the first permeate bore (23a) and wherein the second permeate collection passage (14b) further includes a second permeate network disposed in the body (15) and including a second permeate bore (23b) coupled to the second permeate outlet (25b) and at least one second permeate channel (24b) connecting the second permeate inlet (22b) to the second permeate bore (23b) .

10. The use of the filtration manifold according to claim 8, wherein the first permeate collection passage includes multiple first permeate channels (24a) and multiple first permeate inlets (22a) on the first side (16a) of the manifold (11), wherein the second permeate collection passage includes multiple second permeate channels (24b) and multiple second permeate inlets (22b) on the second side (16b) of the manifold (11), and wherein the first permeate inlets (22a) fluidly communicate with a single first permeate passageway (23a) that fluidly communicates with the first permeate outlet (25a) and wherein the second permeate inlets (22b) fluidly communicate with a single second permeate passageway (23b) that fluidly communicates with the second permeate outlet (25b).

11. The use of the filtration manifold according to any one of claims 8 to 10, further comprising one or more first permeate conduits in the form of grooves (26a) on the first side (16a) of the manifold (11) fluidly communicating with first permeate inlets (22a) and one or more second permeate conduits in the form of grooves (26b) on the second side (16b) of the manifold (11) fluidly communicating with second permeate inlets (22b).

12. The use of the filtration manifold according to any one of the claims 8 to 11, further comprising a first sampling port (30a) in fluid communication with the first permeate collection passage (14a) and isolated from the second permeate collection passage (14b) and a second sampling port (30b) in fluid communication with the second permeate collection passage (14b) and isolated from the first permeate collection passage (14a); optionally wherein the body (15) further includes a feed passage (40), the feed passage (40) including a feed outlet (42) on each side of the body (15), and/or wherein the body (15) further includes a retentate passage (50), the retentate passage (50) including a retentate inlet (51) on each side of the body (15).

13. The use of a filtration manifold (11) according to any one of claims 8 to 12, said filtration assembly comprising first and second filter sets (12a, 12b), wherein each filter set (12a, 12b) includes at least one filtration unit (13) having a filtration medium (60), the filtration medium (60) having a feed side (62a) and a permeate side (62b), wherein the first permeate collection passage (14a) is in fluid communication with the permeate side (62b) of the filtration medium (60) of each filtration unit (13) of the first filter set (12a) and is fluidly isolated from the permeate side (62b) of the filtration medium (60) of each filtration unit (13) of the second filter set (12b), and wherein the second permeate collection passage (14b) is in fluid communication with the permeate side (62b) of the filtration medium (60) of each filtration unit (13) of the second filter set (12b) and is fluidly isolated from the permeate side (62b) of the filtration medium (60) of each filtration unit (13) of the first filter set (12a).

14. The use of the filtration manifold according to claim 13, wherein the manifold (11) includes a retentate passage (50), the retentate passage (50) having a retentate inlet (51) fluidly communicating with the feed side (62a) of the filtration medium (60) of each filtration unit (13) of the first and second filter sets (12a, 12b).

## Patentansprüche

1. Filtrationsanordnung (10), umfassend:
Zwei oder mehr Filtersets (12a; 12b), wobei jedes Filterset mindestens eine Filtrationseinheit mit einem Filtrationsmedium einschließt, und
einen Filtrationsverteiler (11), umfassend einen Körper (15) mit ersten und zweiten Seiten (16a, 16b); einen ersten Permeatsammeldurchgang (14a) in dem Körper (15), welcher in Fließverbindung mit der Permeatseite des Filtrationsmediums von jeder der Filtrationseinheiten des ersten Filtersets (12a) ist, wobei der erste Permeatsammeldurchgang (14a) einen ersten Permeateinlass (22a) auf der ersten Seite (16a) des Körpers (15) und einen ersten Permeatauslass (25a) an dem Körper (15) zum Ausspeisen von Permeat aus dem Verteiler (11) aufweist; und einen zweiten Permeatsammeldurchgang (14b) in dem Körper (15), welcher in Fließverbindung mit der Permeatseite des Filtrationsmediums von jeder der Filtrationseinheiten des zweiten Filtersets (12b) steht, wobei der zweite Permeatsammeldurchgang (14b) einen zweiten Permeateinlass (22b) auf der zweiten Seite (16b) des Körpers (15) und einen zweiten Permeatauslass (25b) an dem Körper (15) zum Ausspeisen von Permeat aus dem Verteiler umfasst,
worin der erste Permeatsammeldurchgang (14a) fluidmäßig von der zweiten Seite (16b) des Körpers (15) getrennt ist, wobei der zweite Permeatsammeldurchlass (14b) fluidmäßig von der ersten Seite (16a) des Körpers (15) getrennt ist und wobei der erste und der zweite Permeatsammeldurchlass (14a, 14b) voneinander innerhalb des Körpers (15) getrennt sind und an keiner einzigen Stelle des Verteilers (11) in Fließverbindung stehen, wobei der erste Permeatauslass (25a) nur Permeat aus dem Verteiler (11) ausspeist, welches von dem ersten Permeatsammeldurchlass (14a) und der ersten Seite (16a) des Verteilers (11) stammt, und wobei der zweite Permeatauslass (25b) aus dem Verteiler (11) lediglich Permeat von dem zweiten Permeatdurchgang (14b) und der zweiten Seite (16b) des Verteilers (11) ausspeist,
und worin der Verteiler (11) einen Einspeisedurchgang (40) aufweist, wobei der Einspeisedurchgang einen Einspeiseauslass (42) aufweist, der in Fließverbindung mit der Einspeiseseite (62a) des Filtrationsmediums (60) einer jeden Filtrationseinheit (13) und den ersten und zweiten Filtersets (12a, 12b) steht.

2. Filtrationsanordnung nach Anspruch 1, worin der erste Permeatsammeldurchgang (14a) ein erstes Permeatnetzwerk in dem Körper (15) angeordnet umfasst und eine erste Permetbohrung (23a) einschließt, welche mit einem ersten Permeatauslass (25a) gekoppelt ist, und worin mindestens ein erster Permeatkanal (24a) den ersten Permeateinlass (22a) mit der ersten Permeatbohrung (23a) verbindet, und worin der zweite Permeatsammeldurchgang (14b) ferner ein zweites Permeatnetzwerk in dem Körper (15) angeordnet umfasst und eine zweite Permeatbohrung (23b) aufweist, welche mit dem zweiten Permeatauslass (25b) gekoppelt ist, und worin mindestens ein zweiter Permeatkanal (24b) den zweiten Permeateinlass (22b) mit der zweiten Permeatbohrung (23b) verbindet.

3. Filtrationsanordnung nach Anspruch 1, worin der erste Permeatsammeldurchgang mehrere erste Permeatkanäle (24a) und mehrere erste Permeateinlässe (22a) auf der ersten Seite (16a) des Verteilers (11) umfasst, worin der zweite Permeatsammeldurchgang mehrere zweite Permeatkanäle (24b) und mehrere zweite Permeateinlässe (22b) auf der zweiten Seite (16b) des Verteilers (11) aufweist, und worin die ersten Permeateinlässe (22a) fluidmäßig mit einem ersten Permeatdurchgang (23a) kommunizieren, welcher fluidmäßig mit dem ersten Permeatauslass (25a) kommuniziert, und worin die zweiten Permeateinlässe (22b) fluidmäßig mit einem einzigen Permeatdurchgang (23b) kommunizieren, welcher fluidmäßig mit dem zweiten Permeatauslass (25b) kommuniziert.

4. Filtrationsanordnung nach einem der voranstehenden Ansprüche, welche ferner eine oder mehrere Permeatleitungen in Form von Nuten (26a) auf der ersten Seite (16a) des Verteilers (11) umfassen, welche mit den ersten Permeateinlässen (22a) fluidmäßig kommunizieren, und ferner eine oder mehrere zweite Permeatleitungen in Form von Nuten (26b) auf der zweiten Seite (16b) des Verteilers (11), welche fluidmäßig mit den zweiten Permeateinlässen (22b) kommunizieren.

5. Filtrationsanordnung nach einem der voranstehenden Ansprüche, welche ferner einen Entnahmeauslass (30a), welcher in Fließverbindung mit dem ersten Permeatsammeldurchgang (14a) steht und von dem zweiten Permeatsammeldurchgang (14b) getrennt ist, und einen zweiten Entnahmeausgang (30b) aufweist, welcher in Fließverbindung mit dem zweiten Permeatsammeldurchgang (14b) steht und von dem ersten Permeatsammeldurchgang (14a) getrennt ist; wobei optional der Körper (15) ferner einen Einspeisedurchgang (40) aufweist, wobei der Einspeisedurchgang (40) einen Einspeiseauslass (42) auf jeder Seite des Körpers (15) aufweist, und/oder worin der Körper (15) ferner einen Retentatdurchgang (50) aufweist, wobei der Retentatdurchgang (50) einen Retentateinlass (51) auf jeder Seite des Körpers (15) aufweist.

6. Filtrationsanordnung, umfassend einen Filtrationsverteiler (11) nach einem der Ansprüche 1 bis 5, sowie erste und zweite Filtersets (12a, 12b), worin jedes Filterset (12a, 12b) mindestens eine Filtrationseinheit (13) umfasst, welche ein Filtrationsmedium (60) aufweist, wobei das Filtrationsmedium (60) eine Zufuhrseite (62a) und eine Permeatseite (62b) aufweist, worin der erste Permeatsammeldurchgang (14a) in Fließverbindung mit der Permeatseite (62b) des Filtrationsmediums (60) einer jeden Filtrationseinheit (13) des ersten Filtersets (12a) steht und fluidmäßig von der Permeatseite (62b) des Filtrationsmediums (60) einer jeden Filtrationseinheit (13) des zweiten Filtersets (12b) getrennt ist, und worin der zweite Permeatsammeldurchgang (14b) in Fließverbindung mit der Permeatseite (62b) des Filtrationsmediums (60) einer jeden Filtrationseinheit (13) des zweiten Filtersets (12b) steht und fluidmäßig von der Permeatseite (62b) des Filtrationsmediums (60) einer jeden Filtrationseinhheit (13) des ersten Filtersets (12a) getrennt ist.

7. Filtrationsanordnung nach Anspruch 6, worin der Verteiler (11) einen Retentatdurchgang (50) aufweist, wobei der Retentatdurchgang (50) einen Retentateinlass (51) aufweist, welcher in Fließverbindung mit der Zufuhrseite (62a) des Filtrationsmediums (60) einer jeden Filtrationseinheit (13) des ersten und zweiten Filtersets (12a, 12) steht.

8. Verwendung eines Filtrationsverteilers (11) in einer Filtrationsanordnung (10), umfassend zwei oder mehrere Filtersets (12a; 12b), wobei jedes Filterset mindestens eine Filtrationseinheit mit einem Filtrationsmedium umfasst; wobei der Filtrationsverteiler (11) einen Körper (15) mit ersten und zweiten Seiten (16a, 16b) umfasst; wobei ein erster Filtrationssammeldurchgang (14a) in dem Körper (15) in Fließverbindung mit der Permeatseite des Filtrationsmediums einer jeden Filtrationseinheit des ersten Filtersets (12a) steht, wobei der erste Permeatsammeldurchgang (14a) einen ersten Permeateinlass (22a) auf der ersten Seite (16a) des Körpers (15) und einen ersten Permeatauslass (25a) an dem Körper (15) zum Ausspeisen von Permeat aus dem Verteiler (11) umfasst; und wobei ein zweiter Permeatsammeldurchgang (14b) in dem Körper (15) in Fließverbindung mit der Permeatseite des Filtrationsmediums einer jeden Filtrationseinheit des zweiten Filtersets (12b) steht, wobei der zweite Permeatsammeldurchgang (14b) einen zweiten Permeateinlass (22b) auf der zweiten Seite (16b) des Körpers (15) und einen zweiten Permeatauslass (25b) an dem Körper (15) zum Ausspeisen von Permeat aus dem Verteiler umfasst,
worin der erste Permeatsammeldurchgang (14a) fluidmäßig von der zweiten Seite (16b) des Körpers (15) getrennt ist, wobei der zweite Permeatsammeldurchgang (14b) fluidmäßig von der ersten Seite (16a) des Körpers (15) getrennt ist, und wobei der erste und der zweite Permeatsammeldurchgang (14a, 14b) voneinander in dem Körper (15) getrennt sind und an keinem Punkt des Verteilers (11) in Fließverbindung stehen, wobei der erste Permeatauslass (25a) aus dem Verteiler (11) nur Permeat aus dem ersten Permeatsammeldurchgang (14a) und der ersten Seite (16a) auf dem Verteiler (11) ausspeist und wobei der zweite Permeatauslass (25b) aus dem Verteiler (11) nur Permeat von dem zweiten Permeatdurchgang (14b) und der zweiten Seite (16b) des Verteilers (11) ausspeist, und worin der Verteiler (11) einen Einspeisedurchgang (40) aufweist, wobei der Einspeisedurchgang (40) einen Einspeiseauslass (42) in Fließverbindung mit der Einspeiseseite (62a) des Filtrationsmediums (60) einer jeden Filtrationseinheit (13) des ersten und zweiten Filtersets (12a, 12b) aufweist.

9. Verwendung eines Filtrationsverteilers gemäß Anspruch 8, worin der erste Permeatsammeldurchgang (14a) ferner ein erstes Permeatnetzwerk in dem Körper (15) angeordnet aufweist und eine erste Permeatbohrung (23a) einschließt, welche mit dem ersten Permeatauslass (25a) und mindestens einem ersten Permeatkanal (24a) gekoppelt ist, welcher den ersten Permeateinlass (22a) mit der ersten Permeatbohrung (23a) verbindet, und worin der zweite Permeatsammeldurchgang (14b) ferner ein Permeatnetzwerk in dem Körper (15) angeordnet umfasst und eine zweite Permeatbohrung (23b) aufweist, welche mit dem zweiten Permeatauslass (25b) und mindestens einem zweiten Permeatkanal (24b) gekoppelt ist, welcher den zweiten Permeateinlass (22b) mit der zweiten Permeatbohrung (23b) verbindet.

10. Verwendung des Filtrationsverteilers nach Anspruch 8, worin der erste Permeatsammeldurchgang mehrere erste Permeatkanäle (24a) und mehrere erste Permeateinlässe (22a) auf der ersten Seite (16a) des Verteilers (11) aufweist, worin der zweite Permeatsammeldurchgang mehrere zweite Permeatkanäle (24b) und mehrere zweite Permeateinlässe (22b) auf der zweiten Seite (16b) des Verteilers (11) aufweist, und worin die ersten Permeateinlässe (22a) fluidmäßig mit einem einzigen ersten Permeatdurchgang (23a) kommunizieren, welcher fluidmäßig mit dem ersten Permeatauslass (25a) kommuniziert, und worin die zweiten Permeateinlässe (22b) fluidmäßig mit einem einzigen zweiten Permeatdurchgang (23b) kommunizieren, welcher fluidmäßig mit dem zweiten Permeatauslass (25b) kommuniziert.

11. Verwendung des Filtrationsverteilers gemäß einem der Ansprüche 8 bis 10, welcher ferner eine oder mehrere erste Permeatleitungen in Form von Nuten (26a) auf der ersten Seite (16a) des Verteilers (11) aufweist, welche fluidmäßig mit den ersten Permeateinlässen (22a) kommunizieren, und eine oder mehrere zweite Permeatleitungen in Form von Nuten (26b) auf der zweiten Seite (16b) des Verteilers (11) aufweist, welche fluidmäßig mit den zweiten Permeateinlässen (22b) kommunizieren.

12. Verwendung des Filtrationsverteilers nach einem oder mehreren der Ansprüche 8 bis 11, welcher ferner einen ersten Entnahmeausgang (30a) in Fließverbindung mit dem ersten Permeatsammeldurchgang (14a), welcher getrennt von dem zweiten Permeatsammeldurchgang (14b) ist, und einen zweiten Entnahmeausgang (30b) in Fließverbindung mit dem zweiten Permeatsammeldurchgang (14b) aufweist, der getrennt von dem ersten Permeatsammeldurchgang (14a) ist; wobei gegebenenfalls der Körper (15) ferner einen Einspeisedurchgang (40) aufweist, wobei der Einspeisedurchgang (40) einen Einspeiseauslass (42) auf jeder Seite des Körpers (15) umfasst, und/oder wobei der Körper (15) ferner einen Retentatdurchgang (50) aufweist, wobei der Retentatdurchgang (50) einen Retentateinlass (51) auf jeder Seite des Körpers (15) aufweist.

13. Verwendung eines Filtrationsverteilers (11) nach einem der Ansprüche 8 bis 12, wobei die Filtrationsanordnung erste und zweite Filtersets (12a, 12b) umfasst, wobei jedes Filterset (12a, 12b) mindestens eine Filtrationseinheit (13) aufweist, welche ein Filtrationsmedium (60) aufweist, wobei das Filtrationsmedium (60) eine Zufuhrseite (62a) und eine Permeatseite (62b) aufweist, worin der erste Permeatsammeldurchgang (14a) in Fließverbindung mit der Permeatseite (62b) des Filtrationsmediums (60) einer jeden Filtrationseinheit (13) des ersten Filtersets (12a) steht und fluidmäßig von der Permeatseite (62b) des Filtrationsmediums (60) einer jeden Filtrationseinheit (13) des zweiten Filtersets (12b) getrennt ist, und worin der zweite Permeatsammeldurchgang (14b) in Fließverbindung mit der Permeatseite (62b) des Filtrationsmediums (60) einer jeden Filtrationseinheit (13) des zweiten Filtersets (12b) steht und fluidmäßig von der Permeatseite (62b) des Filtrationsmediums (60) einer jeden Filtrationseinheit (13) des ersten Filtersets (12a) getrennt ist.

14. Verwendung des Filtrationsverteilers gemäß Anspruch 13, worin der Verteiler (11) einen Retentatdurchgang (50) aufweist, wobei der Retentatdurchgang (50) einen Retentateinlass (51) aufweist, welcher fluidmäßig mit der Einspeiseseite (62a) des Filtrationsmediums (60) einer jeden Filtrationseinheit (13) des ersten und zweiten Filtersets (12a, 12b) kommuniziert.

## Revendications

1. Ensemble de filtration (10) comprenant :
deux ou plus séries de filtres (12a; 12b), chaque série de filtres incluant au moins une unité de filtration comportant un milieu de filtration, et
un distributeur de filtration (11) comprenant un corps (15) ayant des premier et second côtés (16a, 16b) ; un premier passage de recueil de perméat (14a) dans le corps (15) en communication fluide avec le côté de perméat du milieu de filtration de chaque unité de filtration de la première série de filtres (12a), le premier passage de recueil de perméat (14a) incluant une première entrée de perméat (22a) sur le premier côté (16a) du corps (15) et une première sortie de perméat (25a) sur le corps (15) pour évacuer le perméat du distributeur (11) ; et un second passage de recueil de perméat (14b) dans le corps (15) en communication fluide avec le côté de perméat du milieu de filtration de chaque unité de filtration de la seconde série de filtres (12b), le second passage de recueil de perméat (14b) incluant une seconde entrée de perméat (22b) sur le second côté (16b) du corps (15) et une seconde sortie de perméat (25b) sur le corps (15) pour évacuer le perméat du distributeur,
dans lequel le premier passage de recueil de perméat (14a) est fluidiquement isolé du second côté (16b) du corps (15), le second passage de recueil de perméat (14b) est fluidiquement isolé du premier côté (16a) du corps (15), et les premier et second passages de recueil de perméat (14a, 14b) sont isolés l'un de l'autre dans le corps (15) et ne sont pas en communication fluide en tout point dans le distributeur (11), la première sortie de perméat (25a) évacuant depuis le distributeur (11) seulement du perméat venant du premier passage de recueil de perméat (14a) et du premier côté (16a) du distributeur (11) et la seconde sortie de perméat (25b) évacuant depuis le distributeur (11) seulement du perméat venant du second passage de perméat (14b) et du second côté (16b) du distributeur (11),
et dans lequel le distributeur (11) inclut un passage d'alimentation (40), le passage d'alimentation (40) ayant une sortie d'alimentation (42) communiquant fluidiquement avec le côté d'alimentation (62a) du milieu de filtration (60) de chaque unité de filtration (13) des première et seconde séries de filtres (12a; 12b).

2. Ensemble de filtration selon la revendication 1, dans lequel le premier passage de recueil de perméat (14a) inclut en outre un premier réseau de perméat disposé dans le corps (15) et incluant un premier alésage de perméat (23a) couplé à la première sortie de perméat (25a) et au moins un premier canal de perméat (24a) reliant la première entrée de perméat (22a) au premier alésage de perméat (23a) et dans lequel le second passage de recueil de perméat (14b) inclut en outre un second réseau de perméat disposé dans le corps (15) et incluant un second alésage de perméat (23b) couplé à la seconde sortie de perméat (25b) et au moins un second canal de perméat (24b) reliant la seconde entrée de perméat (22b) au second alésage de perméat (23b).

3. Ensemble de filtration selon la revendication 1, dans lequel le premier passage de recueil de perméat inclut de multiples premiers canaux de perméat (24a) et de multiples premières entrées de perméat (22a) sur le premier côté (16a) du distributeur (11), dans lequel le second passage de recueil de perméat inclut de multiples seconds canaux de perméat (24b) et de multiples secondes entrées de perméat (22b) sur le second côté (16b) du distributeur (11), et dans lequel les premières entrées de perméat (22a) communiquent fluidiquement avec un seul premier passage de perméat (23a) qui communique fluidiquement avec la première sortie de perméat (25a) et dans lequel les secondes entrées de perméat (22b) communiquent fluidiquement avec un seul second passage de perméat (23b) qui communique fluidiquement avec la seconde sortie de perméat (25b).

4. Ensemble de filtration selon l'une quelconque des revendications précédentes, comprenant en outre un ou plusieurs premiers conduits de perméat sous la forme de rainures (26a) sur le premier côté (16a) du distributeur (11) communiquant fluidiquement avec les premières entrées de perméat (22a) et un ou plusieurs seconds conduits de perméat sous la forme de rainures (26b) sur le second côté (16b) du distributeur (11) communiquant fluidiquement avec des secondes entrées de perméat (22b).

5. Ensemble de filtration selon l'une quelconque des revendications précédentes, comprenant en outre un premier orifice d'échantillonnage (30a) en communication fluide avec le premier passage de recueil de perméat (14a) et isolé du second passage de recueil de perméat (14b) et un second orifice d'échantillonnage (30b) en communication fluide avec le second passage de recueil de perméat (14b) et isolé du premier passage de recueil de perméat (14a) ; dans lequel en option le corps (15) inclut en outre un passage d'alimentation (40), le passage d'alimentation (40) incluant une sortie d'alimentation (42) sur chaque côté du corps (15), et/ou dans lequel le corps (15) inclut en outre un passage de rétentat (50), le passage de rétentat (50) incluant une entrée de rétentat (51) sur chaque côté du corps (15).

6. Ensemble de filtration comprenant un distributeur de filtration (11) selon l'une quelconque des revendications 1 à 5 et des première et seconde séries de filtres (12a; 12b), dans lequel chaque ensemble de filtres (12a, 12b) inclut au moins une unité de filtration (13) comportant un milieu de filtration (60), le milieu de filtration (60) comportant un côté d'alimentation (62a) et un côté de perméat (62b), dans lequel le premier passage de recueil de perméat (14a) est en communication fluide avec le côté de perméat (62b) du milieu de filtration (60) de chaque unité de filtration (13) de la première série de filtres (12a) et est isolé fluidiquement du côté de perméat (62b) du milieu de filtration (60) de chaque unité de filtration (13) de la seconde série de filtres (12b), et dans lequel le second passage de recueil de perméat (14b) est en communication fluide avec le côté de perméat (62b) du milieu de filtration (60) de chaque unité de filtration (13) de la seconde série de filtres (12b) et est isolé fluidiquement du côté de perméat (62b) du milieu de filtration (60) de chaque unité de filtres (13) de la première série de filtres (12a).

7. Ensemble de filtration selon la revendication 6, dans lequel le distributeur (11) inclut un passage de rétentat (50) comportant une entrée de rétentat (51) communiquant fluidiquement avec le côté d'alimentation (62a) du milieu de filtration (60) de chaque unité de filtration (13) des première et seconde séries de filtres (12a, 12b).

8. Utilisation d'un distributeur de filtration (11) dans un ensemble de filtration (10) comprenant deux ou plus séries de filtres (12a, 12b), chaque série de filtres incluant au moins une unité de filtration comportant un milieu de filtration ; ledit distributeur de filtration (11) comprenant un corps (15) ayant des premier et second côtés (16a, 16b) ; un premier passage de recueil de perméat (14a) dans le corps (15) en communication fluide avec le côté de perméat du milieu de filtration de chaque unité de filtration de la première série de filtres (12a), le premier passage de recueil de perméat (14a) incluant une première entrée de perméat (22a) sur le premier côté (16a) du corps (15) et une première sortie de perméat (25a) sur le corps (15) pour évacuer du perméat du distributeur (11) ; et un second passage de recueil de perméat (14b) dans le corps (15) en communication fluide avec le côté de perméat du milieu de filtration de chaque unité de filtration de la seconde série de filtres (12b), le second passage de recueil de perméat (14b) incluant une seconde entrée de perméat (22b) sur le second côté (16b) du corps (15) et une seconde sortie de perméat (25b) sur le corps (15) pour évacuer du perméat du distributeur,
dans lequel le premier passage de recueil de perméat (14a) est isolé fluidiquement du second côté (16b) du corps (15), le second passage de recueil de perméat (14b) est fluidiquement isolé du premier côté (16a) du corps (15), et les premier et second passages de recueil de perméat (14a, 14b) sont isolés l'un de l'autre dans le corps (15) et ne sont pas en communication fluide en tout point dans le distributeur (11), la première sortie de perméat (25a) évacuant du distributeur (11) seulement du perméat venant du premier passage de recueil de perméat (14a) et du premier côté (16a) du distributeur (11) et la seconde sortie de perméat (25b) évacuant du distributeur (11) seulement du perméat venant du second passage de recueil de perméat (14b) et du second côté (16b) du distributeur (11), et dans lequel le distributeur (11) inclut un passage d'alimentation (40), le passage d'alimentation (40) ayant une sortie d'alimentation (42) communiquant fluidiquement avec le côté d'alimentation (62a) du milieu de filtration (60) de chaque unité de filtration (13) des première et seconde séries de filtres (12a; 12b).

9. Utilisation d'un distributeur de filtration selon la revendication 8, dans laquelle le premier passage de recueil de perméat (14a) inclut en outre un premier réseau de perméat disposé dans le corps (15) et incluant un premier alésage de perméat (23a) couplé à la première sortie de perméat (25a) et au moins un premier canal de perméat (24a) reliant la première entrée de perméat (22a) au premier alésage de perméat (23a) et dans lequel le second passage de recueil de perméat (14b) inclut en outre un second réseau de perméat disposé dans le corps (15) et incluant un second alésage de perméat (23b) couplé à la seconde sortie de perméat (25b) et au moins un second canal de perméat (24b) reliant la seconde entrée de perméat (22b) au second alésage de perméat (23b).

10. Utilisation du distributeur de filtration selon la revendication 8, dans laquelle le premier passage de recueil de perméat inclut de multiples premiers canaux de perméat (24a) et de multiples premières entrées de perméat (22a) sur le premier côté (16a) du distributeur (11), dans lequel le second passage de recueil de perméat inclut de multiples seconds canaux de perméat (24b) et de multiples secondes entrées de perméat (22b) sur le second côté (16b) du distributeur (11), et dans lequel les premières entrées de perméat (22a) communiquent fluidiquement avec un seul premier passage de perméat (23a) qui communique fluidiquement avec la première sortie de perméat (25a) et dans lequel les secondes entrées de perméat (22b) communiquent fluidiquement avec un seul second passage de perméat (23b) qui communique fluidiquement avec la seconde sortie de perméat (25b).

11. Utilisation du distributeur de filtration selon l'une quelconque des revendications 8 à 10, comprenant en outre un ou plusieurs premiers conduits de perméat sous la forme de rainures (26a) sur le premier côté (16a) du distributeur (11) communiquant fluidiquement avec des premières entrées de perméat (22a) et un ou plusieurs seconds conduits de perméat sous la forme de rainures (26b) sur le second côté (16b) du distributeur (11) communiquant fluidiquement avec des secondes entrées de perméat (22b).

12. Utilisation du distributeur de filtration selon l'une quelconque des revendications 8 à 11, comprenant en outre un premier orifice d'échantillonnage (30a) en communication fluide avec le premier passage de recueil de perméat (14a) et isolé du second passage de recueil de perméat (14b) et un second orifice d'échantillonnage (30b) en communication fluide avec le second passage de recueil de perméat (14b) et isolé du premier passage de recueil de perméat (14a) ; dans lequel en option le corps (15) inclut en outre un passage d'alimentation (40), le passage d'alimentation (40) incluant une sortie d'alimentation (42) sur chaque côté du corps (15), et/ou dans lequel le corps (15) inclut en outre un passage de rétentat (50), le passage de rétentat (50) incluant une entrée de rétentat (51) sur chaque côté du corps (15).

13. Utilisation d'un distributeur de filtration (11) selon l'une quelconque des revendications 8 à 12, l'ensemble de filtration comprenant des première et seconde séries de filtres (12a; 12b), dans laquelle chaque série de filtres (12a; 12b) inclut au moins une unité de filtration (13) comportant un milieu de filtration (60), le milieu de filtration (60) comportant un côté d'alimentation (62a) et un côté de perméat (62b), dans lequel le premier passage de recueil de perméat (14a) est en communication fluide avec le côté de perméat (62b) du milieu de filtration (60) de chaque unité de filtration (13) de la première série de filtres (12a) et est isolé fluidiquement du côté de perméat (62b) du milieu de filtration (60) de chaque unité de filtration (13) de la seconde série de filtres (12b), et dans lequel le second passage de recueil de perméat (14b) est en communication fluide avec le côté de perméat (62b) du milieu de filtration (60) de chaque unité de filtration (13) de la seconde série de filtres (12b) et est isolé fluidiquement du côté de perméat (62b) du milieu de filtration (60) de chaque unité de filtration (13) de la première série de filtres (12a).

14. Utilisation du distributeur de filtration selon la revendication 13, dans laquelle le distributeur (11) inclut un passage de rétentat (50) comportant une entrée de rétentat (51) communiquant fluidiquement avec le côté d'alimentation (62a) du milieu de filtration (60) de chaque unité de filtration (13) des première et seconde séries de filtres (12a, 12b).
